# EUROPÄISCHE PATENTSCHRIFT

(11) **EP 1 853 648 B1**
(45) Veröffentlichungstag und Bekanntmachung des Hinweises auf die Patenterteilung: **10.08.2016**
(21) Anmeldenummer: 06708292.5
(22) Anmeldetag: 15.02.2006
(51) Int. Cl.: C08J 3/22, C08L 67/00

(54) **VERFAHREN ZUR COMPOUNDIERUNG VON POLYKONDENSATEN**
METHOD FOR COMPOUNDING POLYCONDENSATES
PROCÉDÉ POUR COMBINER DES POLYCONDENSATS

(30) Priorität: 17.02.2005 DE 102005007479
(43) Veröffentlichungstag der Anmeldung: 14.11.2007
(73) Patentinhaber: BASF SE, 67056 Ludwigshafen am Rhein (DE)
(72) Erfinder: SCHERZER, Dietrich, 67433 Neustadt (DE); EIPPER, Andreas, 67067 Ludwigshafen (DE); WEISS, Carsten, 276252 Singapore (SG); YAMAMOTO, Motonori, 68199 Mannheim (DE); SKUPIN, Gabriel, 67346 Speyer (DE); WITT, Uwe, 67112 Mutterstadt (DE)
(74) Vertreter: BASF IP Association
(86) Internationale Anmeldenummer: PCT/EP2006/050966
(87) Internationale Veröffentlichungsnummer: WO 2006/087346

(56) Entgegenhaltungen:
- DE-A1- 3 924 237
- US-A1- 2004 147 678

## Beschreibung

Verfahren zur Compoundierung von Polykondensaten ausgewählt aus der Gruppe bestehend aus Polyamid, Polyester und Polycarbonat in Gegenwart einer oligomeren oder polymeren epoxidierten Verbindung, eines Bisphenol-A-Epoxids oder eines Epoxidgruppen-haltigen natürlichen Öls oder Fettsäureesters, dadurch gekennzeichnet, dass die Compoundierung bei Temperaturen kleiner/gleich 220°C und in Gegenwart eines Aktivators ausgewählt aus der Gruppe bestehend aus: Zink-, Titanverbindung und C₁-C₁₂-Alkyltriphenylphosphonium-halogenid in einer Konzentration von 0,3 bis 5 Gew.% bezogen auf das Polykondensat, durchgeführt wird.

Verfahren zum Compoundieren von PET in Gegenwart einer oligomeren oder polymeren epoxidierten Verbindung sind beispielsweise aus US 2004/0147678 und DE-A-1 392 237 bekannt. Typische Verarbeitungstemperaturen betragen bei PET 240 bis 300°C.

Zahlreiche Polymere müssen jedoch bei tieferen Temperaturen compoundiert werden. Insbesondere Biopolymere wie beispielsweise Polyhydroxyalkanoate zersetzen sich bei Temperaturen, die deutlich über 200°C liegen. Andere Biopolymere bauen bei Temperaturen über 200°C merklich ab. Die Schmelze-Volumenfließrate (MVR) steigt an. Die hochviskosen Schmelzen lassen sich für bestimmte Anwendungen wie beispielsweise das Blasformen nicht mehr verarbeiten.

Die Aufgabe der vorliegenden Erfindung war es, ein Verfahren zu finden, das die Nachteile des aus US 2004/0147678 bekannten Verfahrens nicht aufweist.

Diese Aufgabe wird überraschenderweise dadurch gelöst, das der Schmelze eine Zink-, Titanverbindung oder ein C₁-C₁₂-Alkyltriphenylphosphonium-halogenid zugesetzt wird. Der Epoxidgruppen haltige Kompatibilizer wird durch die obengenannten Verbindungen aktiviert und kann dem Kettenabbau bereits bei Temperaturen unterhalb von 220°C entgegenwirken.

Prinzipiell ist das Verfahren zur Compoundierung von Polykondensaten ausgewählt aus der Gruppe bestehend aus Polyamiden, Polyestern und Polycarbonaten geeignet.

Insbesondere eignet sich das erfindungsgemäße Verfahren zur Herstellung biologisch abbaubarer Homo- oder Copolyester ausgewählt aus der Gruppe bestehend aus Polylactid, Polycaprolacton, Polyhydroxyalkanoate und Polyester aus aliphatischen und /oder aromatischen Dicarbonsäuren und aliphatischen Diolen.

Weiterhin kommen alle Polyester auf Basis von aliphatischen und aromatischen Dicarbonsäuren und aliphatischen Dihydroxyverbindung, sogenannte teilaromatische Polyester, in Betracht. Selbstverständlich sind auch Mischungen mehrerer solcher Polyester als Polykondensat geeignet.

Unter teilaromatischen Polyestern sollen erfindungsgemäß auch Polyesterderivate verstanden werden wie Polyetherester, Polyesteramide oder Polyetheresteramide. Zu den geeigneten teilaromatischen Polyestern gehören lineare nicht kettenverlängerte Polyester (WO 92/09654). Bevorzugt werden kettenverlängerte und/oder verzweigte teilaromatische Polyester. Letztere sind aus den Schriften , WO 96/15173 bis 15176, 21689 bis 21692, 25446, 25448 oder der WO 98/12242, bekannt, auf die ausdrücklich Bezug genommen wird. Mischungen unterschiedlicher teilaromatischer Polyester kommen ebenso in Betracht. Insbesondere sind unter teilaromatischen Polyestern Produkte wie Ecoflex® (BASF Aktiengesellschaft) und Eastar® Bio (Novamont) zu verstehen.

Zu den besonders bevorzugten teilaromatischen Polyestern zählen Polyester, die als wesentliche Komponenten
A) eine Säurekomponente aus
   a1) 30 bis 99 mol-% mindestens einer aliphatischen oder mindestens einer cycloaliphatischen Dicarbonsäure oder deren esterbildende Derivate oder Mischungen davon
   a2) 1 bis 70 mol-% mindestens einer aromatischen Dicarbonsäure oder deren esterbildendem Derivat oder Mischungen davon und
   a3) 0 bis 5 mol-% einer sulfonatgruppenhaltigen Verbindung,
B) eine Diolkomponente ausgewählt aus mindestens einem C₂-bis C₁₂-Alkandiol und mindestens einem C₅- bis C₁₀-Cycloalkandiol oder Mischungen davon
   und gewünschtenfalls darüber hinaus eine oder mehrere Komponenten ausgewählt aus
C) einer Komponente ausgewählt aus
   c1) mindestens einer Etherfunktionen enthaltenden Dihydroxyverbindung der Formel I

      HO-[(CH₂)ₙ-O]ₘ-H (I)

      in der n für 2, 3 oder 4 und m für eine ganze Zahl von 2 bis 250 stehen
   c2) mindestens einer Hydroxycarbonsäure oder Formel IIa oder IIb 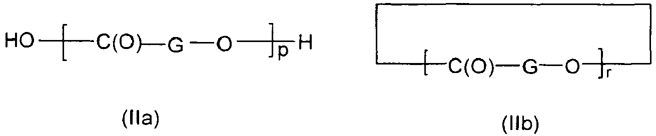 in der p eine ganze Zahl von 1 bis 1500 und r eine ganze Zahl von 1 bis 4 bedeuten, und G für einen Rest steht, der ausgewählt ist aus der Gruppe bestehend aus Phenylen, -(CH₂)_{q}-, wobei q eine ganze Zahl von 1 bis 5 bedeutet, -C(R)H- und -C(R)HCH₂, wobei R für Methyl oder Ethyl steht
   c3) mindestens einem Amino-C₂- bis C₁₂-alkanol oder mindestens einem Amino-C₅-bis C₁₀-cycloalkanol oder Mischungen davon
   c4) mindestens einem Diamino-C₁-bis C₈-Alkan
   c5) mindestens einem 2,2'-Bisoxazolins der allgemeinen Formel III 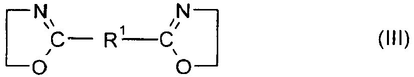 wobei R¹ eine Einfachbindung, eine (CH₂)₂-Alkylengruppe, mit z = 2, 3 oder 4, oder eine Phenylengruppe bedeutet
   c6) mindestens einer Aminocarbonsäure ausgewählt aus der Gruppe, bestehend aus den natürlichen Aminosäuren, Polyamiden, erhältlich durch Polykondensation einer Dicarbonsäure mit 4 bis 6 C-Atomen und einem Diamin mit 4 bis 10 C-Atomen, Verbindungen der Formeln IVa und IVb 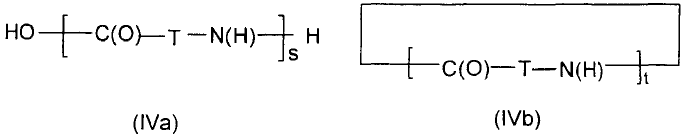 in der s eine ganze Zahl von 1 bis 1500 und t eine ganze Zahl von 1 bis 4 bedeuten, und T für einen Rest steht, der ausgewählt ist aus der Gruppe bestehend aus Phenylen, -(CH₂)ᵤ-, wobei u eine ganze Zahl von 1 bis 12 bedeutet, -C(R²)H- und -C(R²)HCH₂, wobei R² für Methyl oder Ethyl steht,
      und Polyoxazolinen mit der wiederkehrenden Einheit V 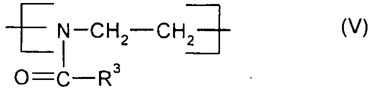
      in der R³ für Wasserstoff, C₁-C₆-Alkyl, C₅-C₈-Cycloalkyl, unsubstituierten oder mit C₁-C₄-Alkylgruppen bis zu dreifach substituiertes Phenyl oder für Tetrahydrofuryl steht,
      oder Mischungen aus c1 bis c6
         und
D) einer Komponente ausgewählt aus
   d1) mindestens einer Verbindung mit mindestens drei zur Esterbildung befähigten Gruppen,
   d2) mindestens eines Isocyanates
   d3) mindestens eines Divinylethers
oder Mischungen aus d1) bis d3) enthalten.

Die Säurekomponente A der teilaromatischen Polyester enthält in einer bevorzugten Ausführungsform von 30 bis 70, insbesondere von 40 bis 60 mol-% a1 und von 30 bis 70, insbesondere von 40 bis 60 mol-% a2.

Als aliphatische Säuren und die entsprechenden Derivate a1 kommen im allgemeinen solche mit 2 bis 10 Kohlenstoffatomen, vorzugsweise 4 bis 6 Kohlenstoffatomen, in Betracht. Sie können sowohl linear als auch verzweigt sein. Die im Rahmen der vorliegenden Erfindung verwendbaren cycloaliphatischen Dicarbonsäuren sind in der Regel solche mit 7 bis 10 Kohlenstoffatomen und insbesondere solche mit 8 Kohlenstoffatomen. Prinzipiell können jedoch auch Dicarbonsäuren mit einer größeren Anzahl an Kohlenstoffatomen, beispielsweise mit bis zu 30 Kohlenstoffatomen, eingesetzt werden.

Beispielhaft zu nennen sind: Malonsäure, Bernsteinsäure, Glutarsäure, 2-Methylglutarsäure, 3-Methylglutarsäure, Adipinsäure, Pimelinsäure, Azelainsäure, Sebacinsäure, Fumarsäure, 2,2-Dimethylglutarsäure, Suberinsäure, 1,3-Cyclopentandicarbonsäure, 1,4-Cyclohexandicarbonsäure, 1,3-Cyclohexandicarbonsäure, Diglykolsäure, Itaconsäure, Maleinsäure und 2,5-Norbornandicarbonsäure.

Als esterbildende Derivate der oben genannten aliphatischen oder cycloaliphatischen Dicarbonsäuren, die ebenso verwendbar sind, sind insbesondere die Di-C₁- bis C₆-Alkylester, wie Dimethyl-, Diethyl-, Di-n-propyl, Di-isopropyl, Di-n-butyl, Di-iso-butyl, Di-t-butyl, Di-n-pentyl-, Di-iso-pentyl oder Di-n-hexylester zu nennen. Anhydride der Dicarbonsäuren können ebenfalls eingesetzt werden.

Dabei können die Dicarbonsäuren oder deren esterbildenden Derivate, einzeln oder als Gemisch aus zwei oder mehr davon eingesetzt werden.

Besonders bevorzugt wird Adipinsäure, Sebacinsäure oder deren jeweilige esterbildende Derivate oder Mischungen davon eingesetzt. Besonders bevorzugt wird Adipinsäure oder deren esterbildende Derivate, wie deren Alkylester oder deren Mischungen eingesetzt.

Als aromatische Dicarbonsäure a2 sind im allgemeinen solche mit 8 bis 12 Kohlenstoffatomen und vorzugsweise solche mit 8 Kohlenstoffatomen zu nennen. Beispielhaft erwähnt seien Terephthalsäure, Isophthalsäure, 2,6-Naphthoesäure und 1,5-Naphthoesäure sowie esterbildende Derivate davon. Dabei sind insbesondere die Di-C₁-C₆-Alkylester, z.B. Dimethyl-, Diethyl-, Di-n-propyl-, Di-iso-propyl, Di-n-butyl-, Di-iso-butyl, Di-t-butyl, Di-n-pentyl-, Di-iso-pentyl oder Di-n-hexylester zu nennen. Die Anhydride der Dicarbonsäuren a2 sind ebenso geeignete esterbildende Derivate.

Prinzipiell können jedoch auch aromatische Dicarbonsäuren a2 mit einer größeren Anzahl an Kohlenstoffatomen, beispielsweise bis zu 20 Kohlenstoffatomen, eingesetzt werden.

Die aromatischen Dicarbonsäuren oder deren esterbildende Derivate a2 können einzeln oder als Gemisch aus zwei oder mehr davon eingesetzt werden. Besonders bevorzugt wird Terephthalsäure oder deren esterbildende Derivate wie Dimethylterephthalat, verwendet.

Als sulfonatgruppenhaltige Verbindung setzt man üblicherweise ein Alkali- oder Erdalkalimetallsalz einer sulfonatgruppenhaltigen Dicarbonsäure oder deren esterbildende

Derivate ein, bevorzugt Alkalimetallsalze der 5-Sulphoisophthalsäure oder deren Mischungen, besonders bevorzugt das Natriumsalz.

Nach einer der bevorzugten Ausführungsformen enthält die Säurekomponente A von 40 bis 60 mol-% a1, von 40 bis 60 mol-% a2 und von 0 bis 2 mol-% a3. Nach einer weiteren bevorzugten Ausführungsform enthält die Säurekomponente A von 40 bis 59,9 mol-% a1, von 40 bis 59,9 mol-% a2 und von 0,1 bis 1 mol-% a3, insbesondere von 40 bis 59,8 mol-% a1, von 40 bis 59,8 mol-% a2 und von 0,2 bis 0,5 mol-% a3.

Im allgemeinen werden die Diole B unter verzweigten oder linearen Alkandiolen mit 2 bis 12 Kohlenstoffatomen, bevorzugt 4 bis 6 Kohlenstoffatomen, oder Cycloalkandiolen mit 5 bis 10 Kohlenstoffatomen ausgewählt.

Beispiele geeigneter Alkandiole sind Ethylenglykol, 1,2-Propandiol, 1,3-Propandiol, 1,2-Butandiol, 1,4-Butandiol, 1,5-Pentandiol, 2,4-Dimethyl-2-ethylhexan-1,3-diol, 2,2-Dimethyl- 1,3-propandiol, 2-Ethyl-2-butyl-1,3-propandiol, 2-Ethyl-2-isobutyl- 1,3-propandiol, 2,2,4-Trimethyl-1,6-hexandiol, insbesondere Ethylenglykol, 1,3-Propandiol, 1,4-Butandiol und 2,2-Dimethyl- 1,3-propandiol (Neopentylglykol); Cyclopentandiol, 1,4-Cyclohexandiol, 1,2-Cyclohexandimethanol, 1,3-Cyclohexandimethanol, 1,4-Cyclohexandimethanol oder 2,2,4,4-Tetramethyl-1,3-cyclobutandiol. Es können auch Mischungen unterschiedlicher Alkandiole verwendet werden.

Abhängig davon ob ein Überschuß an Säure- oder OH-Endgruppen gewünscht wird, kann entweder die Komponente A oder die Komponente B im Überschuß eingesetzt werden. Nach einer bevorzugten Ausführungsform kann das Molverhältnis der eingesetzten Komponenten A zu B im Bereich von 0,4:1 bis 1,5:1, bevorzugt im Bereich von 0,6:1 bis 1,1:1 liegen.

Neben den Komponenten A und B können die Polyester, auf denen die erfindungsgemäßen Polyestermischungen basieren, weitere Komponenten enthalten.

Als Dihydroxyverbindungen c1 setzt man bevorzugt Diethylenglykol, Triethylenglykol, Polyethylenglykol, Polypropylenglykol und Polytetrahydrofuran (Poly-THF), besonders bevorzugt Diethylenglykol, Triethylenglykol und Polyethylenglykol, ein, wobei man auch Mischungen davon oder Verbindungen, die unterschiedliche Variablen n aufweisen (siehe Formel I), beispielsweise Polyethylenglykol, das Propyleneinheiten (n = 3) enthält, beispielsweise erhältlich durch Polymerisation nach an sich bekannten Methoden von zuerst Ethylenoxid und anschließend mit Propylenoxid, besonders bevorzugt ein Polymer auf Basis von Polyethylenglykol, mit unterschiedlichen Variablen n, wobei Einheiten gebildet aus Ethylenoxid überwiegen. Das Molekulargewicht (Mₙ) des Polyethylenglykols wählt man in der Regel im Bereich von 250 bis 8000, bevorzugt von 600 bis 3000 g/mol.

Nach einer der bevorzugten Ausführungsformen können beispielsweise von 15 bis 98, bevorzugt 60 bis 99,5 mol-% der Diole B und 0,2 bis 85, bevorzugt 0,5 bis 30 mol-% der Dihydroxyverbindungen c1, bezogen auf die molare Menge von B und c1, für die Herstellung der teilaromatischen Polyester verwendet werden.

In einer bevorzugten Ausführungsform setzt man als Hydroxycarbonsäure c2) ein: Glykolsäure, D-, L-, D/L-Milchsäure, 6-Hydroxyhexansäure, deren cyclische Derivate wie Glycolid (1,4-Dioxan-2,5-dion), D-, L-Dilactid (3,6-dimethyl-1,4-dioxan-2,5-dion), p-Hydroxybenzoesäure sowie deren Oligomere und 3-Polyhydroxyalkanoate wie Polyhydroxybuttersäure, Polyhydroxyvaleriansäure, Polylactid (beispielsweise als EcoPLA^{®} 2000D (Fa. Cargill) erhältlich) sowie eine Mischung aus 3-Polyhydroxybuttersäure und Polyhydroxy-valeriansäure (letzteres ist unter dem Namen Biopol^{®} von Zeneca erhältlich) oder auch andere Copolymere der 3-Polyhydroxybuttersäure und Polyhydroxyalkansäuren wie Polyhydroxyhexansäure oder Polyhydroxyoktansäure, besonders bevorzugt für die Herstellung von teilaromatischen Polyestern sind die niedermolekularen und cyclischen Derivate davon.

Die Hydroxycarbonsäuren können beispielsweise in Mengen von 0,01 bis 50, bevorzugt von 0,1 bis 40 Gew.-% bezogen auf die Menge an A und B verwendet werden.

Als Amino-C₂-C₁₂-alkanol oder Amino-C₅-C₁₀-cycloalkanol (Komponente c3), wobei hierunter auch 4-Aminomethylcyclohexanmethanol fallen soll, setzt man bevorzugt Amino-C₂-C₆-alkanole wie 2-Aminoethanol, 3-Aminopropanol, 4-Aminobutanol, 5-Aminopen-tanol, 6-Aminohexanol sowie Amino-C₅-C₆-cyloalkanole wie Aminocyclopentanol und Aminocyclohexanol oder Mischungen davon ein.

Als Diamino-C₁-C₈-alkan (Komponente c4) setzt man bevorzugt Diamino-C₄-C₆-alkane ein wie 1,4-Diaminobutan, 1,5-Diaminopentan und 1,6-Diaminohexan (Hexamethylendiamin, "HMD").

Nach einer bevorzugten Ausführungsform kann von 0,5 bis 99,5 mol-%, bevorzugt 0,5 bis 50 mol-%, c3, bezogen auf die Molmenge von B, und von 0 bis 50, bevorzugt von 0 bis 35 mol-%, c4, bezogen auf die Molmenge von B, für die Herstellung der teilaromatischen Polyester eingesetzt werden.

Die 2,2'-Bisoxazoline c5 der allgemeinen Formel III sind im allgemeinen erhältlich durch das Verfahren aus Angew. Chem. Int. Edit., Vol. 11 (1972), S. 287-288. Besonders bevorzugte Bisoxazoline sind solche, in denen R¹ eine Einfachbindung, eine (CH₂)₂-Alkylengruppe, mit z = 2,3 oder 4 wie Methylen, Ethan-1,2-diyl, Propan-1,3-diyl, Propan-1,2-diyl, oder eine Phenylengruppe bedeutet. Als besonders bevorzugte Bisoxazoline seien 2,2'-Bis(2-oxazolin), Bis(2-oxazolinyl)methan, 1,2-Bis(2-oxazolinyl)ethan, 1,3-Bis(2-oxazolinyl)propan oder 1,4-Bis(2-oxazolinyl)butan, insbesondere 1,4-Bis(2-oxazolinyl)benzol, 1,2-Bis(2-oxazolinyl)benzol oder 1,3-Bis(2-oxazolinyl)benzol genannt.

Zur Herstellung der teilaromatischen Polyester können beispielsweise von 70 bis 98 mol-% B, bis 30 mol-% c3 und 0,5 bis 30 mol-% c4 und 0,5 bis 30 mol-% c5, jeweils bezogen auf die Summe der Molmengen der Komponenten B, c3, c4 und c5, verwendet werden. Nach einer anderen bevorzugten Ausführungsform ist es möglich von 0,1 bis 5, bevorzugt 0,2 bis 4 Gew.-% c5, bezogen auf das Gesamtgewicht von A und B, einzusetzen.

Als Komponente c6 können natürliche Aminocarbonsäuren verwendet werden. Zu diesen zählen Valin, Leucin, Isoleucin, Threonin, Methionin, Phenylalanin, Tryptophan, Lysin, Alanin, Arginin, Aspartamsäure, Cystein, Glutaminsäure, Glycin, Histidin, Prolin, Serin, Tryosin, Asparagin oder Glutamin.

Bevorzugte Aminocarbonsäuren der allgemeinen Formeln IVa und IVb sind die, worin s eine ganze Zahl von 1 bis 1000 und t eine ganze Zahl von 1 bis 4, bevorzugt 1 oder 2 bedeuten und T ausgewählt ist aus der Gruppe Phenylen und -(CH₂)ᵤ-, wobei u 1, 5 oder 12 bedeutet.

Ferner kann c6 auch ein Polyoxazolin der allgemeinen Formel V sein. C6 kann aber auch eine Mischung unterschiedlicher Aminocarbonsäuren und/oder Polyoxazoline sein.

Nach einer bevorzugten Ausführungsform kann c6 in Mengen von 0,01 bis 50, bevorzugt von 0,1 bis 40 Gew.-%, bezogen auf die Gesamtmenge der Komponenten A und B, eingesetzt werden.

Als weitere Komponenten, die optional zur Herstellung der teilaromatischen Polyester eingesetzt werden können, zählen Verbindungen d1, die mindestens drei zur Esterbildung befähigte Gruppen enthalten.

Die Verbindungen d1 enthalten bevorzugt drei bis zehn funktionelle Gruppen, welche zur Ausbildung von Esterbindungen fähig sind. Besonders bevorzugte Verbindungen d1 haben drei bis sechs funktionelle Gruppen dieser Art im Molekül, insbesondere drei bis sechs Hydroxylgruppen und/oder Carboxylgruppen. Beispielhaft seien genannt:
Weinsäure, Zitronensäure, Äpfelsäure;
Trimethylolpropan, Trimethylolethan;
Pentaerythrit;
Polyethertriole;
Glycerin;
Trimesinsäure;
Trimellitsäure, -anhydrid;
Pyromellitsäure, -dianhydrid und
Hydroxyisophthalsäure.

Die Verbindungen d1 werden in der Regel in Mengen von 0,01 bis 15, bevorzugt 0,05 bis 10, besonders bevorzugt 0,1 bis 4 mol-%, bezogen auf die Komponente A eingesetzt.

Als Komponente d2 werden ein oder eine Mischung unterschiedlicher Isocyanate eingesetzt. Es können aromatische oder aliphatische Diisocyanate eingesetzt werden. Es können aber auch höher funktionelle Isocyanate verwendet werden.

Unter einem aromatischen Diisocyanat d2 werden im Rahmen der vorliegenden Erfindung vor allem

Toluylen-2,4-diisocyanat, Toluylen-2,6-diisocyanat, 2,2'-Diphenylmethandiisocyanat, 2,4'-Diphenylmethandiisocyanat, 4,4'-Diphenylmethandiisocyanat, Naphthylen-1,5-diisocyanat oder Xylylen-diisocyanat verstanden.

Darunter werden 2,2'-, 2,4'- sowie 4,4'-Diphenylmethandiisocyanat als Komponente d2 besonders bevorzugt. Im Allgemeinen werden letztere Diisocyanate als Mischung eingesetzt.

Als dreikerniges Isocyanat d2 kommt auch Tri(4-isocyanophenyl)methan in Betracht. Die mehrkernigen aromatischen Diisocyanate fallen beispielsweise bei der Herstellung von ein- oder zweikernigen Diisocyanaten an.

In untergeordneten Mengen, z.B. bis zu 5 Gew.-%, bezogen auf das Gesamtgewicht der Komponente d2, kann die Komponente d2 auch Urethiongruppen, beispielsweise zum Verkappen der Isocyanatgruppen, enthalten.

Unter einem aliphatischen Diisocyanat d2 werden im Rahmen der vorliegenden Erfindung vor allem lineare oder verzweigte Alkylendiisocyanate oder Cycloalkylendiisocyanate mit 2 bis 20 Kohlenstoffatomen, bevorzugt 3 bis 12 Kohlenstoffatomen, z.B. 1,6-Hexamethylendiisocyanat, Isophorondiisocyanat oder Methylen-bis(4-isocyanatocyclohexan), verstanden. Besonders bevorzugte aliphatische Diisocyanate d2 sind 1,6-Hexamethylendiisocyanat und Isophorondiisocyanat.

Zu den bevorzugten Isocyanuraten zählen die aliphatischen Isocyanurate, die sich von Alkylendiisocyanaten oder Cycloalkylendiisocyanaten mit 2 bis 20 Kohlenstoffatomen, bevorzugt 3 bis 12 Kohlenstoffatomen, z.B. Isophorondiisocyanat oder Methylen-bis(4-isocyanatocyclohexan), ableiten. Dabei können die Alkylendiisocyanate sowohl linear als auch verzweigt sein. Besonders bevorzugt werden Isocyanurate, die auf n-Hexamethylendiisocyanat basieren, beispielsweise cyclische Trimere, Pentamere oder höhere Oligomere des n-Hexamethylendiisocyanats.

Im allgemeinen wird die Komponente d2 in Mengen von 0,01 bis 5, bevorzugt 0,05 bis 4 mol-%, besonders bevorzugt 0,1 bis 4 mol-% bezogen auf die Summe der Molmengen von A und B verwendet.

Als Divinylether d3 kann man im allgemeinen alle üblichen und kommerziell erhältlichen Divinylether einsetzen. Bevorzugt verwendet werden 1,4-Butandiol-divinylether, 1,6-Hexandiol-divinylether oder 1,4-Cyclohexandimethanol-divinylether oder Mischungen davon.

Bevorzugt werden die Divinylether in Mengen von 0,01 bis 5, insbesondere von 0,2 bis 4 Gew.-%, bezogen auf das Gesamtgewicht von A und B, eingesetzt.

Beispiele bevorzugter teilaromatischer Polyester basieren auf den folgenden Komponenten
A, B, d1
A, B, d2
A, B, d1, d2
A, B, d3
A, B, c1
A, B, c1, d3
A, B, c3, c4
A, B, c3, c4, c5
A, B, d1, c3, c5
A, B, c3, d3
A, B, c3, d1
A, B, c1, c3, d3
A, B, c2

Darunter sind teilaromatische Polyester, die auf A, B, d1 oder A, B, d2 oder auf A, B, d1, d2 basieren besonders bevorzugt. Nach einer anderen bevorzugten Ausführungsform basieren die teilaromatischen Polyester auf A, B, c3, c4, c5 oder A, B, d1, c3, c5.

Die genannten teilaromatischen Polyester und die erfindungsgemäßen Polyestermischungen sind in der Regel biologisch abbaubar.

Im Sinne der vorliegenden Erfindung ist das Merkmal "biologisch abbaubar" für einen Stoff oder ein Stoffgemisch dann erfüllt, wenn dieser Stoff oder das Stoffgemisch in mindestens einem der drei in DIN V 54900-2 (Vornorm, Stand September 1998) definierten Verfahren einen prozentualen Grad des biologischen Abbaus von mindestens 60% aufweist.

Im Allgemeinen führt die biologische Abbaubarkeit dazu, daß die Polyester(mischungen) in einer angemessenen und nachweisbaren Zeitspanne zerfallen. Der Abbau kann enzymatisch, hydrolytisch, oxidativ und/oder durch Einwirkung elektromagnetischer Strahlung, beispielsweise UV-Strahlung, erfolgen und meist zum überwiegenden Teil durch die Einwirkung von Mikroorganismen wie Bakterien, Hefen, Pilzen und Algen bewirkt werden. Die biologische Abbaubarkeit lässt sich beispielsweise dadurch quantifizieren, dass Polyester mit Kompost gemischt und für eine bestimmte Zeit gelagert werden. Beispielsweise wird gemäß DIN EN 13432 oder DIN V 54900-2, Verfahren 3, CO₂-freie Luft durch gereiften Kompost während des Kompostierens strömen gelassen und dieser einem definierten Temperaturprogramm unterworfen. Hierbei wird die biologische Abbaubarkeit über das Verhältnis der Netto-CO₂-Freisetzung der Probe (nach Abzug der CO₂-Freisetzung durch den Kompost ohne Probe) zur maximalen CO₂-Freisetzung der Probe (berechnet aus dem Kohlenstoffgehalt der Probe) als prozentualer Grad des biologischen Abbaus definiert. Biologisch abbaubare Polyester(mischungen) zeigen in der Regel schon nach wenigen Tagen der Kompostierung deutliche Abbauerscheinungen wie Pilzbewuchs, Riss- und Lochbildung.

Andere Methoden zur Bestimmung der Bioabbaubarkeit werden beispielsweise in ASTM D 5338 und ASTM D 6400 beschrieben.

Die Herstellung der teilaromatischen Polyester ist an sich bekannt oder kann nach an sich bekannten Methoden erfolgen.

Die bevorzugten teilaromatischen Polyester sind charakterisiert durch ein Molekulargewicht (Mₙ) im Bereich von 1000 bis 100000, insbesondere im Bereich von 9000 bis 75000 g/mol, bevorzugt im Bereich von 10000 bis 50000 g/mol und einem Schmelzpunkt im Bereich von 60 bis 170, bevorzugt im Bereich von 80 bis 150°C.

Die genannten teilaromatischen Polyester können Hydroxy- und/oder Carboxylendgruppen in jedem beliebigen Verhältnis aufweisen. Die genannten teilaromatischen Polyester können auch endgruppenmodifiziert werden. So können beispielsweise OH-Endgruppen durch Umsetzung mit Phthalsäure, Phthalsäureanhydrid, Trimellithsäure, Trimellithsäureanhydrid, Pyromellithsäure oder Pyromellithsäureanhydrid säuremodifiziert werden.

Bevorzugt sind als Polykondensate weiterhin die folgenden biologisch abbaubaren Polyestermischungen, Homo- oder Copolyester ausgewählt aus der Gruppe bestehend aus Polylactid, Polycaprolacton, Polyhydroxyalkanoate und Polyester aus aliphatischen Dicarbonsäuren und aliphatischen Diolen, geeignet.

Bevorzugte Polykondensate sind weiterhin Polylactid (PLA) und Polyhydroxyalkanoate, und hier insbesondere Polyhydroxybutyrat (PHB) und Polyhydroxybutyrate covaleriat (PHBV). Insbesondere sind Produkte wie NatureWorks® (Polylaktid der Fa. Cargill Dow), Biocycle® (Polyhydroxybutyrat der Fa. PHB Ind.); Enmat® (Polyhydroxybutyrate covaleriat der Fa. Tianan) umfasst.

Bevorzugte Kompatibilizer sind oligomere oder polymere, epoxidierte Verbindungen, beispielsweise Di- oder Polyglycidester von Di- oder Polycarbonsäuren oder Di- oder Polyglycidether von Di- oder Polyolen, oder Copolymere aus Styrol und Glycidyl(meth)acrylaten, wie sie beispielsweise von Fa. Johnson Polymer unter der Marke Joncryl® ADR 4367 oder Joncryl® ADR 4368 vertrieben werden; oder auch die Glycidylether des Bisphenol A, wie sie beispielsweise als Epikote® 828 von der Fa. Resolution Performance Products vertrieben werden.

Auch werden Kompatibilizer bevorzugt, die sich aus Epoxidgruppen-haltigen (epoxidierten) natürlichen Ölen oder Fettsäureester zusammen setzen. Unter natürlichen

Ölen werden beispielsweise Olivenöl, Leinöl, Sojabohnenöl, Palmöl, Erdnussöl, Kokusnußöl, Tangöl, Lebertran oder eine Mischung von diesen Verbindungen verstanden. Insbesondere bevorzugt sind epoxidiertes Sojabohnenöl (z.B. Merginat^{®} ESBO von Hobum, Hamburg, oder Edenol^{®} B 316 von Cognis, Düsseldorf) oder epoxidiertes Leinöl (z. B. Merginat^{®} ELO von Hobum, Hamburg).

Vorzugsweise eignet sich das erfindungsgemäße Verfahren zur Herstellung von biologisch abbaubaren Polyestermischungen enthaltend beispielsweise Ecoflex^{®} als Komponente i und beispielsweise Biocycle^{®}, NatureWorks^{®}, Biopol^{®} oder Enmat^{®} als Komponente ii. Üblicherweise enthalten diese Mischungen von 5 bis 90 Gew.-%, bevorzugt von 10 bis 70 Gew.-%, besonders bevorzugt von 15 bis 60 Gew.-%, insbesondere von 20 bis 50 Gew.-% Komponente i und von 10 bis 95 Gew.-%, bevorzugt von 30 bis 90 Gew.-%, besonders bevorzugt von 40 bis 85 Gew.-%, ganz besonders bevorzugt von 50 bis 80 Gew.-% Komponente ii, wobei sich die Gewichtsprozente jeweils auf das Gesamtgewicht der Komponenten i bis ii beziehen und zusammen 100 Gew.-% ergeben.

Für die Herstellung von Folien ist die Blasenstabilität von großer Bedeutung. Es wurde nun gefunden, dass Mischungen, in denen Komponente i eine kontinuierliche Phase ausbildet und Komponente ii in separaten Bereichen in diese Phase eingebettet ist, gute Blasenstabilität aufweisen. Damit Komponente i eine kontinuierliche Phase ausbildet, weisen die Mischungen in der Regel mehr als 45 Gew.-%, vorzugsweise mehr als 50 Gew.-% an Komponente i bezogen jeweils auf das Gesamtgewicht der Komponenten i und ii (das Polykondensat), auf.

Das erfindungsgemäße Verfahren wird darüberhinaus üblicherweise in Gegenwart von 0,1 bis 5 Gew.-%, bevorzugt von 0,1 bis 2 Gew.-%, besonders bevorzugt von 0,3 bis 1 Gew.-% Kompatibilizer durchgeführt, wobei die Gewichtsprozente jeweils auf das Gesamtgewicht an Polykondensat bezogen sind.

Aktivatoren im Sinne des erfindungsgemäßen Verfahrens sind Zinkverbindungen, Titanverbindungen oder C₁-C₁₂-Alkyltriphenylphosphonium-halogenide. Insbesondere kommen als Aktivatoren Zinkstearat, Tetra-C₁-C₆-alkyl-o-titanat wie beispielsweise Tetrabutyl-o-titanat oder Ethyltriphenyl-phosphoniumbromid in Frage.

Die Aktivatoren werden in Konzentrationen von 0,1 bis 10 Gew.-%, bevorzugt von 0,1 bis 5 Gew.-% und besonders bevorzugt von 0,1 bis 1 Gew.-% bezogen auf das Polykondensat eingesetzt.

In die erfindungsgemäße Schmelzcompoundierung können weitere dem Fachmann bekannte, aber nicht erfindungswesentliche Inhaltsstoffe zugesetzt werden, beispielsweise die in der Kunststofftechnik üblichen Zusatzstoffe wie Stabilisatoren, Neutralisationsmittel, Gleit- und Trennmittel, Antiblockmittel, Farbstoffe oder Füllstoffe. Als Stabilisatoren kommen beispielsweise Antioxidantien wie sterisch gehinderte Phenole in Frage. Einem weiteren oxidativen Abbau der Polykondensate kann somit entgegen gewirkt werden.

Die Herstellung der erfindungsgemäßen biologisch abbaubaren Polyestermischungen aus den einzelnen Komponenten kann nach bekannten Verfahren erfolgen (EP 792 309 und US 5,883,199).

Beispielsweise können alle Komponenten i, ii und der Kompatibilizer in einem Verfahrensschritt in dem Fachmann bekannten Mischvorrichtungen, beispielsweise Knetern oder Extrudern bei erhöhten Temperaturen, beispielsweise von 120°C bis 220°C, gemischt und zur Reaktion gebracht werden.

Mit Hilfe der erfindungsgemäßen Verfahrens werden biologisch abbaubare Polymermischungen erhalten, die sich problemlos (blasenstabil) zu durchstoßfesten Folien verarbeiten lassen.

### Beispiele:

### Anwendungstechnische Messungen:

Das Molekulargewicht Mₙ der teilaromatischen Polyester wurde wie folgt bestimmt:
15 mg der teilaromatischen Polyester wurden in 10 ml Hexafluoroisopropanol (HFIP) gelöst. Jeweils 125 µl dieser Lösung wurden mittels Gelpermeationschromatographie (GPC) analysiert. Die Messungen wurden bei Raumtemperatur durchgeführt. Für die Elution wurde HFIP + 0,05 Gew.-% Trifluoroessigsäure-Ka-Salz verwendet. Die Elutionsgeschwindigkeit betrug 0,5 ml/min. Dabei wurde folgende Säulenkombination verwendet (alle Säulen hergestellt von Fa. Showa Denko Ltd., Japan): Shodex^{®} HFIP-800P (Durchmesser 8 mm, Länge 5 cm), Shodex^{®} HFIP-803 (Durchmesser 8 mm, Länge 30 cm), Shodex^{®} HFIP-803 (Durchmesser 8 mm, Länge 30 cm). Die teilaromatischen Polyester wurden mittels eines RI-Detektors (Differential-Refraktometrie) detektiert. Die Kalibrierung erfolgte mit eng verteilten Polymethylmethacrylat-Standards mit Molekulargewichten von Mₙ = 505 bis Mₙ = 2.740.000. Außerhalb dieses Intervalls liegende Elutionsbereiche wurden durch Extrapolation bestimmt.

Die Schmelztemperaturen der teilaromatischen Polyester wurden durch DSC Messungen mit einem Gerät Exstet DSC 6200R der Fa. Seiko bestimmt:
10 bis 15 mg der jeweiligen Proben wurden unter einer Stickstoffatmosphäre mit einer Aufheizrate von 20°C/min von -70°C auf 200°C aufgeheizt. Als Schmelztemperaturen der Proben wurden die Peaktemperaturen des dabei beobachteten Schmelzpeaks angegeben. Als Referenz wurde jeweils ein leerer Probentiegel verwendet.

Die Homogenität der Mischungen der Komponenten i, ii, und Kompatibilizer sowie der zum Vergleich hergestellten Mischungen wurde bestimmt, indem diese Mischungen bei 190°C jeweils zu Folien mit einer Dicke von 30 µm gepresst wurden. Der Anteil nicht dispergiert vorliegender Komponente ii in diesen Folien wurde durch Augenscheinnahme beurteilt.

### Einsatzstoffe:

Komponente i:
   i-1: Zur Herstellung des Polyesters i-1 wurden 87,3 kg Dimethylterephthalat, 80,3 kg Adipinsäure, 117 kg 1,4-Butandiol und 0,2 kg Glycerin zusammen mit 0,028 kg Tetrabutylorthotitanat (TBOT) gemischt, wobei das Molverhältnis zwischen Alkoholkomponenten und Säurekomponente 1,30 betrug. Das Reaktionsgemisch wurde auf eine Temperatur von 180°C erhitzt und bei dieser Temperatur 6h lang umgesetzt. Anschließend wurde die Temperatur auf 240°C erhöht und die überschüssige Dihydroxyverbindung unter Vakuum über einen Zeitraum von 3h abdestilliert. Anschließend wurden bei 240°C 0,9 kg Hexamethylendiisocyanat innerhalb 1 h langsam zudosiert.
   Der so erhaltene Polyester i-1 wies eine Schmelztemperatur von 119°C und ein Molekulargewicht (Mₙ) von 23000 g/mol auf.
Komponente ii:
   ii-1: PHBN_{(3%)} (Enmat^{®})
Kompatibilizer:
   Joncryl^{®} ADR 4368 der Fa. Johnson Polymer. ESBO: Epoxidiertes Sojabohnenöl (z.B. Merginat^{®} ESBO von Hobum, Hamburg, oder Edenol^{®} B 316 von Cognis, Düsseldorf).

### Beispiele 1 bis 4)

Untersucht wurden Blends (Mischungen) von 60 Gew.-% Ecoflex® und 40 Gew.-% PHBN(3%) Enmat®:

### Durchführung der Versuche:

Das Polymer (Ecoflex-Enmat-Blend) wurde auf der Analysenwaage in ein Glasgefäß eingewogen. Anschließend wurde mittig der Kompatibilizer (bei den Stabilisationsversuchen zusätzlich ein Stabilisator) und danach der Aktivator dazugegeben. Im Vergleichsbeispiel wurde die Compoundierung ohne Aktivator oder nur mit Stabilisator gefahren.

Katalysatoren die als Flüssigkeit vorliegen wurden erst kurz vor dem Einfüllvorgang zugetropft. Die Mischung wurde in den Trichter unseres zylinderförmigen Beschickungsaufsatzes eingefüllt und mittels dem Stempel im Zylinder in den Extruder eingeführt. Die Schmelze zirkulierte 3 min. im Kreis und wurde dann aus dem Extruder abgelassen.

Temp.: 170-171 °C, Drehzahl: 80 U/min., Verweilzeit: 3 min., Einwaage: 17 g (Mischungen aus Polymer/Kompatibilizer, Polymer/Kompatibilizer/Aktivator, Polymer/Stabilisator, Polymer/Kompatibilizer/Aktivator/Stabilisator)
MVR-Messung: 170 °C / 2,16 kg

| Beispiel | Polykondensat [Gew.-%] | Kompatibilizer [Gew.-%] | Aktivator [Gew.-%] | Stabilisator [Gew.-%] | Fließrate MVR [cm³/10 min] 170°C/2,16kg |
|---|---|---|---|---|---|
| Vgl-Bsp-1 | 99 (Ecoflex F/ Enmat-Blend) | 1 (Joncryl^{®} ADR 4368) | -- | -- | 51,4 |
| Bsp-2 | 98,5 | 1 | 0,5 Zinkstearat | -- | 20,1 |
| Bsp-3 | 97,5 | 1 | 0,5 Zinkstearat | 1 Irganox 1010 | 20,0 |
| Bsp-4 | 98,5 | 1 | 0,5 Tetrabutyl-o-titanat | -- | 29,2 |
| Bsp-5 | 98,5 | 1 | 0,5 Ethyltriphenylphosphoniumbromid | -- | 18,0 |
| Bsp-6 | 94,5 | 5 (Merginat®) | 0,5 Zinkstearat | | 39,3 |
| Bsp-7 | 98,5 | 1 (Epikote® 828) | 0,5 Zinkstearat | -- | 31,0 |
| | | | | | |

Die Beispiele 2 bis 7, die neben dem Kompatibilizer auch einen Aktivator enthalten zeigen eine deutlich niedrigere Fließrate (MVR) als Vergleichsbeispiel 1, das zwar einen Kompatibilizer aber keinen Aktivator enthält.

## Patentansprüche

1. Verfahren zur Compoundierung von Polykondensaten ausgewählt aus der Gruppe bestehend aus Polyamid, Polyester und Polycarbonat in Gegenwart einer oligomeren oder polymeren epoxidierten Verbindung, eines Bisphenol-A-Epoxids oder eines Epoxidgruppen-haltigen natürlichen Öls oder Fettsäureesters, **dadurch gekennzeichnet, dass** die Compoundierung bei Temperaturen kleiner/gleich 220°C und in Gegenwart eines Aktivators ausgewählt aus der Gruppe bestehend aus: Zink-, Titanverbindung und C₁-C₁₂-Alkyltriphenylphosphoniumhalogenid in einer Konzentration von 0,3 bis 5 Gew.-% bezogen auf das Polykondensat, durchgeführt wird.

2. Verfahren nach Anspruch 1, wobei das Polykondensat ein oder mehrere biologisch abbaubare Homo- oder Copolyester ausgewählt aus der Gruppe bestehend aus Polylactid, Polycaprolacton, Polyhydroxyalkanoate und Polyester aus aliphatischen und /oder aromatischen Dicarbonsäuren und aliphatischen Diolen ist.

3. Verfahren nach den Ansprüchen 1 bis 2, wobei das Polykondensat ein oder mehrere biologisch abbaubare Homo- oder Copolyester ausgewählt aus der Gruppe bestehend aus Polylactid, Poly-ß-hydroxybutyrat, Poly-ß-hydroxybutyrate coalkanoat und Polyester ist, wobei der Polyester die folgende Zusammensetzung hat:
A) einer Säurekomponente aus
a1) 30 bis 99 mol-% mindestens einer aliphatischen oder mindestens einer cycloaliphatischen Dicarbonsäure oder deren esterbildende Derivate oder Mischungen davon,
a2) 1 bis 70 mol-% mindestens einer aromatischen Dicarbonsäure oder deren esterbildendem Derivat oder Mischungen davon und
a3) 0 bis 5 mol-% einer sulfonatgruppenhaltigen Verbindung,
wobei die Molprozente der Komponenten a1) bis a3) zusammen 100% ergeben und
B) einer Diolkomponente aus mindestens einem C₂-bis C₁₂-Alkandiol oder einem C₅- bis C₁₀-Cycloalkandiol oder Mischungen davon
und gewünschtenfalls darüber hinaus eine oder mehrere Komponenten ausgewählt aus
C) einer Komponente ausgewählt aus
c1) mindestens einer Etherfunktionen enthaltenden Dihydroxyverbindung der Formel I
HO-[(CH₂)ₙ-O]ₘ-H (I)
in der n für 2, 3 oder 4 und m für eine ganze Zahl von 2 bis 250 stehen,
c2) mindestens einer Hydroxycarbonsäure der Formel IIa oder IIb 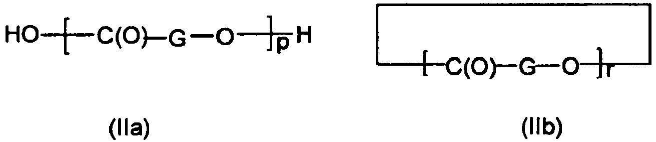 in der p eine ganze Zahl von 1 bis 1500 und r eine ganze Zahl von 1 bis 4 bedeuten, und G für einen Rest steht, der ausgewählt ist aus der Gruppe bestehend aus Phenylen, -(CH₂)_{q}-, wobei q eine ganze Zahl von 1 bis 5 bedeutet, -C(R)H- und -C(R)HCH₂, wobei R für Methyl oder Ethyl steht
c3) mindestens einem Amino-C₂- bis C₁₂-alkanol oder mindestens einem Amino-C₅-bis C₁₀-cycloalkanol oder Mischungen davon
c4) mindestens einem Diamino-C₁- bis C₈-Alkan
c5) mindestens einem 2,2'-Bisoxazolins der allgemeinen Formel III 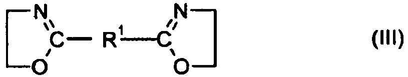 wobei R¹ eine Einfachbindung, eine (CH₂)_{z}-Alkylengruppe, mit z = 2, 3 oder 4, oder eine Phenylengruppe bedeutet
c6) mindestens einer Aminocarbonsäure ausgewählt aus der Gruppe, bestehend aus den natürlichen Aminosäuren, Polyamiden, erhältlich durch Polykondensation einer Dicarbonsäure mit 4 bis 6 C-Atomen und einem Diamin mit 4 bis 10 C-Atomen, Verbindungen der Formeln IVa und IVb 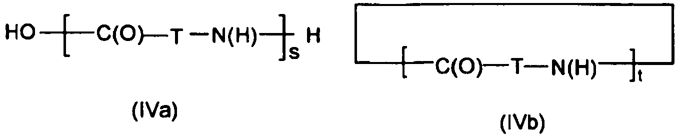
in der s eine ganze Zahl von 1 bis 1500 und t eine ganze Zahl von 1 bis 4 bedeuten, und T für einen Rest steht, der ausgewählt ist aus der Gruppe bestehend aus Phenylen, -(CH₂)ᵤ-, wobei u eine ganze Zahl von 1 bis 12 bedeutet, -C(R²)H- und -C(R²)HCH₂, wobei R² für Methyl oder Ethyl steht,
und Polyoxazolinen mit der wiederkehrenden Einheit V 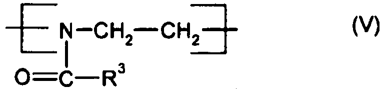 in der R³ für Wasserstoff, C₁-C₆-Alkyl, C₅-C₈-Cycloalkyl, unsubstituierten oder mit C₁-C₄-Alkylgruppen bis zu dreifach substituiertes Phenyl oder für Tetrahydrofuryl steht,
oder Mischungen aus c1) bis c6)
und
D) einer Komponente ausgewählt aus
d1) mindestens einer Verbindung mit mindestens drei zur Esterbildung befähigten Gruppen,
d2) mindestens eines Isocyanates
d3) mindestens eines Divinylethers
oder Mischungen aus d1) bis d3).

4. Verfahren nach den Ansprüchen 1 bis 3, wobei die oligomere oder polymere epoxidierte Verbindung ein Copolymer aus Styrol und Glycidyl(meth)acrylaten ist.

5. Verfahren nach den Ansprüchen 1 bis 3, wobei das Epoxidgruppen-haltigen natürliche Öl epoxidiertes Olivenöl, Leinöl, Sojabohnenöl, Palmöl, Erdnussöl, Kokusnußöl, Tangöl, Lebertran oder eine Mischung von diesen Verbindungen ist.

6. Verfahren nach den Ansprüchen 1 bis 5, wobei die oligomere oder polymere epoxidierte Verbindung, das Epoxidgruppen-haltige natürliche Öl oder der Fettsäureester in einer Konzentration von 0,1 bis 2 Gew.-%, bezogen auf das Polykondensat eingesetzt wird.

7. Verfahren nach den Ansprüchen 1 bis 6, wobei als Aktivator Tetra-C₁-C₈-alkyl-o-titanat eingesetzt wird.

8. Verfahren nach den Ansprüchen 1 bis 6, wobei als Aktivator Zinkstearat eingesetzt wird.

9. Verfahren nach den Ansprüchen 1 bis 6, wobei als Aktivator Ethyl-triphenylphosphonium bromid eingesetzt wird.

## Claims

1. A process for compounding polycondensates selected from the group consisting of polyamide, polyester and polycarbonate, in the presence of an oligomeric or polymeric epoxidized compound, of a bisphenol A epoxide or of an epoxy-containing natural oil or fatty acid ester, which comprises carrying out the compounding at temperatures less than/equal to 220°C and in the presence of an activator selected from the group consisting of: zinc, titanium compound and C₁-C₁₂-alkyltriphenylphosphonium halide, in a concentration of from 0.3 to 5% by weight based on the polycondensate.

2. The process according to claim 1, wherein the polycondensate is one or more biodegradable homo- or copolyesters selected from the group consisting of polylactide, polycaprolactone, polyhydroxyalkanoates and polyesters composed of aliphatic and/or aromatic dicarboxylic acids and aliphatic diols.

3. The process according to claims 1 and 2, wherein the polycondensate is one or more biodegradable homo- or copolyesters selected from the group consisting of polylactide, poly-β-hydroxybutyrate, poly-β-hydroxybutyrate coalkanoate and polyester, the polyester having the following composition:
A) an acid component composed of
a1) from 30 to 99 mol% of at least one aliphatic or of at least one cycloaliphatic dicarboxylic acid or their ester-forming derivatives or mixtures thereof,
a2) from 1 to 70 mol% of at least one aromatic dicarboxylic acid or its ester-forming derivative or mixtures thereof and
a3) from 0 to 5 mol% of a sulfonate-containing compound,
the molar percentages of components a1) to a3) together adding up to 100%, and
B) a diol component composed of at least one C₂- to
- C₁₂-alkanediol or a C₅- to -C₁₀-cycloalkanediol or mixtures thereof
and, if desired, additionally one or more components selected from
C) a component selected from
c1) dihydroxyl compound which comprises at least one ether function and is of the formula I
HO-[(CH₂)ₙ-O]ₘ-H (I)
in which n is 2, 3 or 4 and m is an integer from 2 to 250,
c2) at least one hydroxy carboxylic acid of the formula IIa or IIb 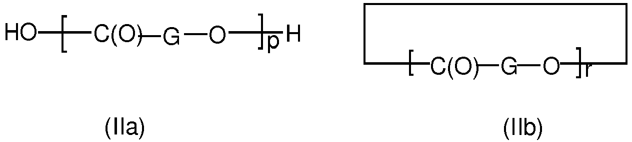 in which p is an integer from 1 to 1500 and r is an integer from 1 to 4, and G is a radical which is selected from the group consisting of phenylene, -(CH₂)_{q}-, where q is an integer from 1 to 5, -C(R)H- and -C(R)HCH₂, where R is methyl or ethyl,
c3) at least one amino-C₂- to -C₁₂-alkanol or at least one amino-C₅- to -C₁₀-cycloalkanol or mixtures thereof,
c4) at least one diamino-C₁- to -C₈-alkane,
c5) at least one 2,2'-bisoxazoline of the general formula III 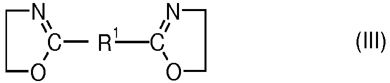 where R¹ is a single bond, a (CH₂)_{z}-alkylene group where z = 2, 3 or 4, or a phenylene group,
c6) at least one aminocarboxylic acid selected from the group consisting of the natural amino acids, polyamides obtainable by polycondensation of a dicarboxylic acid having from 4 to 6 carbon atoms and a diamine having from 4 to 10 carbon atoms, compounds of the formulae IVa and IVb 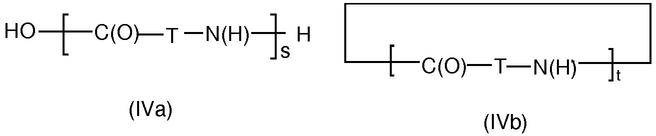 in which s is an integer from 1 to 1500 and t is an integer from 1 to 4, and T is a radical which is selected from the group consisting of phenylene, -(CH₂)ᵤ-, where u is an integer from 1 to 12, -C(R²)H- and-C(R²)HCH₂, where R² is methyl or ethyl,
and polyoxazolines having the repeat unit V 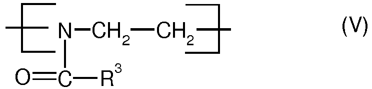 in which R³ is hydrogen, C₁-C₆-alkyl, C₅-C₈-cycloalkyl, phenyl which is unsubstituted or up to trisubstituted by C₁-C₄-alkyl groups, or tetrahydrofuryl,
or mixtures of c1) to c6)
and
D) a component selected from
d1) at least one compound having at least three groups capable of ester formation,
d2) at least one isocyanate,
d3) at least one divinyl ether,
or mixtures of d1) to d3).

4. The process according to claims 1 to 3, wherein the oligomeric or polymeric epoxidized compound is a copolymer composed of styrene and glycidyl (meth)acrylates.

5. The process according to claims 1 to 3, wherein the epoxy-containing natural oil is epoxidized olive oil, linseed oil, soybean oil, palm oil, peanut oil, coconut oil, seaweed oil, fish oil or a mixture of these compounds.

6. The process according to claims 1 to 5, wherein the oligomeric or polymeric epoxidized compound, the epoxy-containing natural oil or the fatty acid ester is used in a concentration of from 0.1 to 2% by weight based on the polycondensate.

7. The process according to claims 1 to 6, wherein the activator used is tetra-C₁-C₆-alkyl o-titanate.

8. The process according to claims 1 to 6, wherein the activator used is zinc stearate.

9. The process according to claims 1 to 6, wherein the activator used is ethyltriphenylphosphonium bromide.

## Revendications

1. Procédé pour le compoundage de produits de polycondensation choisis dans le groupe constitué par un polyamide, un polyester et un polycarbonate en présence d'un composé époxydé oligomère ou polymère, d'un bisphénol-A-époxyde ou d'une huile naturelle contenant des groupes époxy ou d'un ester d'acide gras, **caractérisé en ce qu'**on effectue le compoundage à des températures inférieures/égales à 220 °C et en présence d'un activateur choisi dans le groupe constitué par un composé de zinc, un composé de titane et un halogénure d'alkyl(C₁-C₁₂)triphénylphosphonium à une concentration de 0,3 à 5 % en poids par rapport au produit de polycondensation.

2. Procédé selon la revendication 1, dans lequel le produit de polycondensation consiste en un ou plusieurs homo- ou copolyesters biologiquement dégradables choisis dans le groupe constitué par un polylactide, une polycaprolactone, des polyhydroxy-alcanoates et des polyesters à base d'acides dicarboxyliques aliphatiques et/ou aromatiques et de diols aliphatiques.

3. Procédé selon les revendications 1 à 2, dans lequel le produit de polycondensation consiste en un ou plusieurs homo- ou copolyesters biologiquement dégradables choisis dans le groupe constitué par un polylactide, un poly-β-hydroxybutyrate, un poly-β-hydroxybutyrate co-alcanoate et un polyester, le polyester étant composé comme suit :
A) d'un composant acide constitué de
a1) 30 à 99 % en moles d'au moins un acide dicarboxylique aliphatique ou d'au moins un acide dicarboxylique cycloaliphatique ou de leurs dérivés formant des esters ou de mélanges de ceux-ci,
a2) 1 à 70 % en moles d'au moins un acide dicarboxylique aromatique ou d'un dérivé formant un ester de celui-ci ou de mélanges de ceux-ci et
a3) 0 à 5 % en moles d'un composé contenant des groupes sulfonate,
la somme des pour cent en moles des composants a1) à a3) étant égale à 100 % et
B) d'un composant diol constitué d'au moins un alcanediol en C₂-C₁₂ ou d'un cycloalcanediol en C₅-C₁₀ ou de mélanges de ceux-ci
et si on le désire en outre d'un ou de plusieurs composants choisis parmi
C) un composant choisi parmi
c1) au moins un composé dihydroxy contenant des fonctions éther, de formule I
HO-[(CH₉)ₙ-O]ₘ-H (I)
dans laquelle n vaut 2, 3 ou 4 et m représente un nombre entier valant de 2 à 250,
c2) au moins un acide hydroxycarboxylique de formule IIa ou IIb 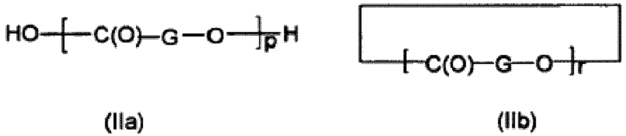 formules dans lesquelles p représente un nombre entier valant de 1 à 1 500 et r représente un nombre entier valant de 1 à 4, et G représente un radical qui est choisi dans le groupe constitué par le groupe phénylène, -(CH₂)_{q}-, q représentant un nombre entier valant de 1 à 5, -C(R)H- et -C(R)HCH₂, R représentant le groupe méthyle ou éthyle
c3) au moins un amino-alcanol (C₂-C₁₂) ou au moins un amino-cycloalcanol(C₅-C₁₀) ou des mélanges de ceux-ci
c4) au moins un diamino-alcane(C₁-C₈)
c5) au moins une 2,2'-bisoxazoline de formule générale III 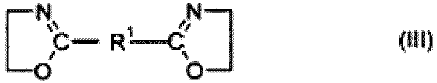 R¹ représentant une liaison simple, un groupe alkylène (CH₂)_{z}, où z = 2, 3 ou 4, ou un groupe phénylène
c6) au moins un acide aminocarboxylique choisi dans le groupe constitué par les acides aminés naturels, les polyamides pouvant être obtenus pat polycondensation d'un acide dicarboxylique ayant de 4 à 6 atomes de carbone et d'une diamine ayant de 4 à 10 atomes de carbone, des composés de formules IVa et IVb 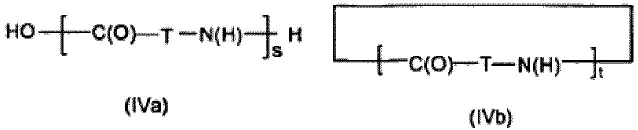 formules dans lesquelles s représente un nombre entier valant de 1 à 1 500 et t représente un nombre entier valant de 1 à 4, et T représente un radical qui est choisi dans le groupe constitué par le groupe phénylène, -(CH₂)ᵤ-, u représentant un nombre entier valant de 1 à 12, -C(R²)H- et -C(R²)HCH₂, R² représentant le groupe méthyle ou éthyle,
et des polyoxazolines comportant le motif répétitif V 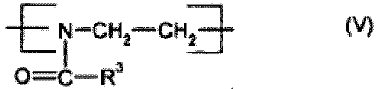 dans lequel R³ représente un atome d'hydrogène, un groupe alkyle en C₁-C₆, cycloalkyle en C₅-C₈, un groupe phényle non substitué ou jusqu'à trois fois substitué par des groupes alkyle en C₁-C₄, ou représente le groupe tétrahydrofuryle,
ou des mélanges de c1) à c6) et
D) un composant choisi parmi
d1) au moins un composé comportant au moins trois groupes aptes à la formation d'ester,
d2) au moins un isocyanate
d3) au moins un éther divinylique
ou des mélanges de d1) à d3).

4. Procédé selon les revendications 1 à 3, dans lequel le composé époxydé oligomère ou polymère est un copolymère de styrène et (méth)acrylates de glycidyle.

5. Procédé selon les revendications 1 à 3, dans lequel l'huile naturelle contenant des groupes époxy est une huile d'olive, huile de lin, huile de soja, huile de palme, huile d'arachide, huile de coprah, huile de tung, huile de foie de morue, époxydées, ou un mélange de ces composés.

6. Procédé selon les revendications 1 à 5, dans lequel on utilise le composé époxydé oligomère ou polymère, l'huile naturelle contenant des groupes époxy ou l'ester d'acide gras à une concentration de 0,1 à 2 % en poids, par rapport au produit de polycondensation.

7. Procédé selon les revendications 1 à 6, dans lequel on utilise comme activateur un o-titanate de tétra-alkyle (C₁-C₆) .

8. Procédé selon les revendications 1 à 6, dans lequel on utilise comme activateur le stéarate de zinc.

9. Procédé selon les revendications 1 à 6, dans lequel on utilise comme activateur le bromure d'éthyltriphénylphosphonium.
